(19) Europäisches Patentamt
European Patent Office
Office européen des brevets

(11) Veröffentlichungsnummer: **0 128 862**
**B1**

(12) # EUROPÄISCHE PATENTSCHRIFT

(45) Veröffentlichungstag der Patentschrift: **01.03.89**

(51) Int. Cl.[4]: **C 09 D 5/08,** C 25 D 13/06, C 23 F 11/16, C 09 D 5/44

(21) Anmeldenummer: **84810218.2**

(22) Anmeldetag: **08.05.84**

(54) **Antikorrosive Überzugsmittel.**

(30) Priorität: **14.05.83 GB 8313320**

(43) Veröffentlichungstag der Anmeldung: **19.12.84 Patentblatt 84/51**

(45) Bekanntmachung des Hinweises auf die Patenterteilung: **01.03.89 Patentblatt 89/9**

(84) Benannte Vertragsstaaten: **AT BE CH DE FR GB IT LI NL SE**

(56) Entgegenhaltungen:
**EP-A- 0 003 817**
**CH-A- 458 048**
**US-A- 4 235 838**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Berner, Godwin, Dr., Waldhofstrasse 70, CH-4310 Rheinfelden (CH)**
Erfinder: **Hoyle, William, Dr., 29 Carrwood Avenue, Bramhall Stockport Cheshire SK7 2PY (GB)**
Erfinder: **Jack, James, Dr., 6, Huxley Drive, Bramhall Stockport Cheshire SK7 2PH (GB)**

**EP 0 128 862 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Überzugsmittel, die durch den Gehalt bestimmter Verbindungen in der Lage sind, die Korrosion metallischer Substrate, insbesondere von Eisenmetallen, zu inhibieren. Bei den Verbindungen handelt es sich um aliphatische oder cycloaliphatische Carbonsäuren mit einem heterocyclischen Rest.

Korrosionsschutz ist eine der wichtigsten Aufgaben von organischen Überzugsmitteln für Metallsubstrate. Viele Vorschläge, den Korrosionsschutz von Anstrichen zu verbessern, sind in der Literatur zu finden z.B. in H. Kittel, Lehrbuch der Lacke und Beschichtungen, Band V, Stuttgart 1977, 46–103. Einmal kann die Barrierenfunktion des Überzugsmittels verbessert werden, um korrosive Agentien wie Sauerstoff, Wasser und Ionen von der Metalloberfläche abzuhalten. Zum anderen können antikorrosive Pigmente zugesetzt werden, welche chemisch oder elektrochemisch in den Korrosionsprozeß eingreifen, beispielsweise durch Bildung unlöslicher Abscheidungen mit Korrosionsprodukten oder durch Passivierung (Polarisierung) der Metalloberfläche. Zu den wirkungsvollsten antikorrosiven Pigmenten zählen Metallchromate und Bleiverbindungen. Metallchromate wurden vor allem deshalb viel verwendet, weil sie sowohl die anodische wie die kathodische Korrosion inhibieren. Heute hat man gewisse Bedenken gegen die Verwendung von Chromaten wegen ihrer potentiellen krebserregenden Wirkung. In ähnlicher Weise hat man gegen die Verwendung von Bleiverbindungen Bedenken wegen ihrer chronischen Toxizität.

Auch Metallsalze von organischen Verbindungen wurden vielfach als Korrosionsinhibitoren vorgeschlagen. So empfiehlt z.B. die Europ. Patentschrift 3817 die Verwendung von Zink- oder Bleisalzen von Hydroxyl- oder Mercaptoverbindungen von 5- oder 6-gliedrigen heterocyclischen Verbindungen, die die charakteristische Gruppe

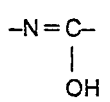 oder 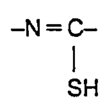

enthalten. Ein typisches Beispiel hierfür sind die Zn- oder Pb-Salze von 2-Mercaptobenzthiazol.

Es wurde nunmehr gefunden, daß bestimmte heterocyclische Carbonsäuren und deren Salze als Korrosionsinhibitoren für Überzugsmittel verwendet werden können, was die Formulierung hochwirksamer Chromat- und Blei-freier antikorrosiver Anstrichstoffe erlaubt.

Solche organische Korrosionsinhibitoren sind keine Pigmente und man ist daher bei ihrer Verwendung in Überzugsmitteln frei in der Wahl der Pigmente oder Füllstoffe. Organische Korrosionsinhibitoren sind bekannt auf dem Gebiet von Kühlwasserkreisläufen oder anderen wäßrigen Systemen wie z.B. in Bohr- und Schneidflüssigkeiten. Auch als Zusätze zu Motorenölen werden organische Korrosionsinhibitoren verwendet. Auf dem Gebiet der Überzugsmittel ist es hingegen bisher bezweifelt worden, daß der Zusatz organischer Korrosionsinhibitoren allein einen für die Praxis ausreichenden Korrosionsschutz ermöglicht (Farbe und Lack 87 (1981) 787).

Es ist daher überraschend, daß die erfindungsgemäßen organischen Korrosionsinhibitoren in Überzugsmitteln eine antikorrosive Wirkung haben, die diejenige der Verbindungen nach EP-A-3817 übertrifft.

Die vorliegende Erfindung betrifft daher ein antikorrosives Überzugsmittel, enthaltend

a) einen Filmbildner

b) als Korrosionsinhibitor eine wirksame Menge einer aliphatischen oder cycloaliphatischen Mono-, Di-, Tri- oder Tetracarbonsäure, die in ihrem aliphatischen oder cycloaliphatischen Rest durch mindestens eine Gruppe der Formel I substituiert ist,

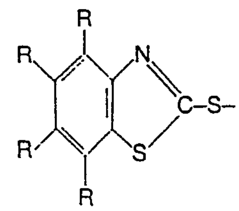 I

worin jedes R unabhängig voneinander Wasserstoff, Alkyl, Halogenalkyl, Alkoxy, Alkylthio, Alkylsulfonyl, Cycloalkyl, Phenyl, Alkylphenyl, Phenylalkyl, Halogen, –CN, $-NO_2$, –COOH, –COOAlkyl, –OH oder eine sekundäre oder tertiäre Amino- oder Carbamoylgruppe bedeutet, sowie Basen-Additionssalze dieser Verbindungen.

R als Alkyl, Alkoxy, Alkylthio oder Alkylsulfonyl enthält vorzugsweise 1–12 C-Atome vor allem 1–6 C-Atome. Beispiele hierfür sind Methyl, Ethyl, Propyl, Isopropyl, n-Butyl, Isobutyl, tert.-Butyl, Pentyl, Hexyl, Octyl, Nonyl, Decyl, Undecyl, Dodecyl und die entsprechenden Alkoxy-, Alkylthio- und Alkylsulfonyl-Reste. R als Cycloalkyl enthält vorzugsweise 5–8 C-Atome. Beispiele hierfür sind Cyclopentyl, Cyclohexyl oder Cyclooctyl.

R als Halogenalkyl enthält vorzugsweise 1–4 C-Atome und 1–3 Fluor- oder Chloratome. Beispiele hierfür sind Chlormethyl, Fluormethyl, Di- und Trifluormethyl oder 2-Chlorethyl.

R als Alkylphenyl enthält vorzugsweise 7–16 C-Atome und kann z.B. Tolyl, Xylyl, 4-Isopropylphenyl, 4-tert.-Butylphenyl, 4-Octylphenyl oder 4-Decylphenyl sein. R als Phenylalkyl enthält vorzugsweise 7–9 C-Atome und kann z.B. Benzyl, 1-Phenylethyl, 2-Phenylethyl, α,α-Dimethylbenzyl oder 3-Phenylpropyl sein.

R als Halogen ist vorzugsweise Fluor, Chlor oder Brom. Wenn R –COOAlkyl ist, so hat das Alkyl vorzugsweise 1–4 C-Atome.

R als Aminogruppe oder Carbamoylgruppe hat vorzugsweise bis zu 20 C-Atome. Beispiele hierfür sind die Gruppen $-NHCH_3$, $-NHC_{12}H_{15}$, –NH-Cyclohexyl, –NH-Phenyl, $-N(CH_3)_2$, $-N(C_4H_9)_2$, $-N(CH_3)$(Benzyl), Morpholino, Piperidino, $-CONH_2$, –CONHPhenyl, $-CONHC_8H_{17}$, $-CON(C_2H_5)_2$, $-CON(CH_2CH_2OH)_2$, Morpholinocarbonyl oder Piperidinocarbonyl.

Bevorzugt ist einer der Substituenten R Wasserstoff, $C_1$–$C_4$-Alkyl, $C_1$–$C_4$-Alkoxy oder eine Aminogruppe und die anderen drei R sind Wasserstoff. Besonders bevorzugt sind alle vier R Wasserstoff.

Die Komponente b) ist vorzugsweise eine Mono- oder Dicarbonsäure oder deren Salz, insbesondere eine Dicarbonsäure oder deren Salz. Der Substituent der Formel I steht vorzugsweise in Betastellung zu einer Carboxylgruppe.

Die Komponente b) ist vorzugsweise eine durch eine Gruppe der Formel I substituierte aliphatische Mono- oder Polycarbonsäure mit 2–20 C-Atomen oder eine cycloaliphatische Mono- oder Polycarbonsäure mit 4–12, insbesondere 5–8 C-Atomen. Außer der Gruppe der Formel I kann die Carbonsäure noch andere Substituenten haben, wie z.B. Hydroxyl, Alkoxy, Halogen oder Aryl.

Bevorzugte Komponenten b) sind Verbindungen der Formel II

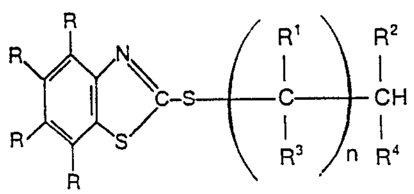 II ,

worin

X und R die vorhin gegebene Bedeutung haben, n null oder eins ist und

$R^1$, $R^2$, $R^3$ und $R^4$ unabhängig voneinander Wasserstoff, Alkyl, Hydroxyalkyl, Halogenalkyl, Alkoxyalkyl, Carboxyalkyl, Carboxyl unsubstituiertes oder mono- oder di-substituiertes Phenyl oder Phenylalkyl bedeuten oder $R^1$ und $R^2$ oder $R^1$ und $R^3$ zusammen unverzweigtes oder verzweigtes Alkylen bedeuten, das durch 1 oder 2 Carboxylgruppen substituiert sein kann, oder $R^1$ und $R^2$ zusammen eine direkte Bindung bedeuten, wobei mindestens einer der Substituenten $R^1$, $R^2$, $R^3$, $R^4$ eine Carboxyl- oder Carboxyalkylgruppe ist, sowie Basen-Additionssalze dieser Verbindungen.

$R^1$, $R^2$, $R^3$ und $R^4$ als Alkyl sind vorzugsweise $C_1$–$C_{18}$-Alkyl, wie z.B. Methyl, Ethyl, n-Propyl, Isopropyl, n-Butyl, Isobutyl, tert.-Butyl, Pentyl, Hexyl, Octyl, Dodecyl oder Octadecyl. Als Hydroxyalkyl oder Halogenalkyl haben diese Substituenten vorzugsweise 1–4 C-Atome. Beispiele hierfür sind Hydroxymethyl, 1- oder 2-Hydroxyethyl, 2- oder 3-Hydroxypropyl, Chlormethyl, Bromethyl oder Bromisopropyl. Als Alkoxyalkyl haben diese Substituenten vorzugsweise 2–10 C-Atome. Beispiele hierfür sind Methoxymethyl, 1-Methoxyethyl, 2-Ethoxypropyl, 1-Methoxybutyl, n-Butoxymethyl oder 4-Isopropoxybutyl.

$R^1$, $R^2$, $R^3$ und $R^4$ als Carboxyalkyl sind vorzugsweise $C_2$–$C_{12}$-Carboxyalkyl wie z.B. Carboxymethyl, 1- oder 2-Carboxyethyl, 3-Carboxypropyl, 2-Carboxyisopropyl, 1- oder 2-Carboxybutyl, 1-, 2- oder 3-Carboxyhexyl, 1,2 Dicarboxyethyl oder 2,3,4-Tricarboxybutyl-1. Dieselben Substituenten als unsubstituiertes oder substituiertes Phenyl oder Phenylalkyl können z.B. 4-Chlorphenyl, 3-Nitrophenyl, Tolyl, Xylyl, 3-Methoxyphenyl, 4-Isopropylphenyl, 3-Carboxyethyl, 4-Hydroxyphenyl, 4-Brombenzyl, 4-tert.-Butylbenzyl, 2-Phenylethyl oder 3-Phenylpropyl, vorzugsweise jedoch Phenyl oder Benzyl sein.

Wenn $R^1$ und $R^2$ oder $R^1$ und $R^3$ zusammen Alkylen sind, so bilden sie zusammen mit den C-Atomen, an die sie gebunden sind, einen Cycloalkanring, vorzugsweise einen Cyclopentan oder Cyclohexanring der durch Alkylgruppen, vorzugsweise $C_1$–$C_4$-Alkylgruppen, oder durch 1 oder 2 Carboxylgruppen substituiert sein kann.

Wenn $R^1$ und $R^2$ zusammen eine direkte Bindung bedeuten, so stellen die Verbindungen der Formel II ungesättigte Carbonsäuren dar.

Bevorzugt sind $R^1$, $R^2$, $R^3$ und $R^4$ Wasserstoff, $C_1$–$C_4$-Alkyl, Carboxyl oder $C_2$–$C_6$-Carboxyalkyl. Besonders bevorzugt ist $R^4$ eine Carboxylgruppe. Bevorzugt sind weiterhin Verbindungen der Formel II, worin mindestens zwei der Substituenten $R^1$, $R^2$, $R^3$ und $R^4$ eine Carboxyl- oder Carboxyalkylgruppe sind.

Basen-Additionssalze sind Metall-, Ammonium- und organische Ammoniumsalze, insbesondere Salze von Alkalimetallen, Erdalkalimetallen, von Metallen der Gruppen IIB, IIIA oder VIII des periodischen Systems der Elemente, Ammoniumsalze oder Salze von organischen Aminen. Beispiele hierfür sind insbesondere Natrium-, Kalium-, Calcium-, Magnesium-, Zink-, Aluminium-, Ammonium-, Trialkylammonium- und Tris(hydroxyethyl)ammonium-Salze.

Beispiele für Korrosionsinhibitoren der Komponente b) sind:

Benzthiazol-2-ylthioessigsäure
5-Carboxybenzthiazol-2-ylthioessigsäure
3-(Benzthiazol-2-ylthio)-propionsäure
5-Trifluormethylbenzthiazol-2-ylthiopropionsäure
4-(Benzthiazol-2-ylthio)-buttersäure
3-(Benzthiazol-2-ylthio)-buttersäure
3-(Benzthiazol-2-ylthio)-3-methyl-buttersäure
Benzthiazol-2-ylthiomalonsäure
Benzthiazol-2-ylthiobernsteinsäure
5-Methylbenzthiazol-2-ylthiobernsteinsäure
6-Ethylbenzthiazol-2-ylthiobernsteinsäure
4-Isopropylbenzthiazol-2-ylthiobernsteinsäure
7-t-Butylbenzthiazol-2-ylthiobernsteinsäure
5-n-Hexylbenzthiazol-2-ylthiobernsteinsäure
6-(1,1,3,3-Tetramethylbutyl)-benzthiazol-2-ylthiobernsteinsäure
6-Cyclohexylbenzthiazole-2-ylthiobernsteinsäure
7-Benzylbenzthiazol-2-ylthiobernsteinsäure
6-Methoxybenzthiazol-2-ylthiobernsteinsäure
6-Ethoxybenzthiazol-2-ylthiobernsteinsäure
7-Ethoxybenzthiazol-2-ylthiobernsteinsäure
5-Methoxybenzthiazol-2-ylthiobernsteinsäure
4-Methylthiobenzthiazol-2-ylthiobernsteinsäure
4-Fluorbenzthiazol-2-ylthiobernsteinsäure
5-Chlorbenzthiazol-2-ylthiobernsteinsäure
7-Brombenzthiazol-2-ylthiobernsteinsäure
6-Chlorbenzthiazol-2-ylthiobernsteinsäure
4-Phenylbenzthiazol-2-ylthiobernsteinsäure
5-Trifluormethylbenzthiazol-2-ylthiobernsteinsäure
5-Carboxybenzthiazol-2-ylthiobernsteinsäure
6-Methylsulfonylbenzthiazol-2-ylthiobernsteinsäure

5-Cyanobenzthiazol-2-ylthiobernsteinsäure
6-Nitrobenzthiazol-2-ylthiobernsteinsäure
5-Cyanobenzthiazol-2-ylthiobernsteinsäure
7-Hydroxybenzthiazol-2-ylthiobernsteinsäure
6-Chlor-4-methylbenzthiazol-2-ylthiobernsteinsäure
5-Chlor-6-n-butylbenzthiazol-2-ylthiobernsteinsäure
4-Brom-5-n-hexylbenzthiazol-2-ylthiobernsteinsäure
5-Nitro-6-n-propylbenzthiazol-ylthiobernsteinsäure
5-Brom-6-n-propoxybenzthiazol-2-ylthiobernsteinsäure
6-Methylaminobenzthiazol-2-ylthiobernsteinsäure
5-Dimethylaminobenzthiazol-2-ylthiobernsteinsäure
7-Phenylaminobenzthiazol-2-ylthiobernsteinsäure
6-Diphenylamino-benzthiazol-2-ylthiobernsteinsäure
4-Benzylaminobenzthiazol-2-ylthiobernsteinsäure
4-Morpholinobenzthiazol-2-ylthiobernsteinsäure
5-Carbamoylbenzthiazol-2-ylthiobernsteinsäure
5-Methylcarbamoylbenzthiazol-2-ylthiobernsteinsäure
5-Diethylcarbamoylbenzthiazol-2-ylthiobernsteinsäure
6-Phenylcarbamoylbenzthiazol-2-ylthiobernsteinsäure
5,6-Dimethyl-benzthiazol-2-ylthiobernsteinsäure
4,5,6-Triethylbenzthiazol-2-ylthiobernsteinsäure
4,5,6,7-Tetramethylbenzthiazol-2-ylthiobernsteinsäure
1-(Benzthiazol-2-ylthio)-propan-1,2-dicarbonsäure
3-(Benzthiazol-2-ylthio)-propan-1,2-dicarbonsäure
3-(6-Trifluormethylbenzthiazol-2-ylthio)-propan-1,2-dicarbonsäure
3-(6-Methoxycarbonylbenzthiazol-2-ylthio)-propan-1,2-dicarbonsäure
3-(6-Aminobenzthiazol-2-ylthio)-propan-1,2-dicarbonsäure
3-(5-Ethylaminobenzthiazol-2-ylthio)-propan-1,2-dicarbonsäure
3-(4-Dibutylaminobenzthiazol-2-ylthio)-propan-1,2-dicarbonsäure
4-(Morpholinobenzthiazol-2-ylthio)-propan-1,2-dicarbonsäure
1-(4-Phenylbenzthiazol-2-ylthio)-propan-1,2-dicarbonsäure
1-(Benzthiazol-2-ylthio)-propan-1,3-dicarbonsäure
1-(6-Ethylbenzthiazol-2-ylthio)-propan-1,3-dicarbonsäure
2-(Benzthiazol-2-ylthio)-propan-1,3-dicarbonsäure
2-(5-Carboxybenzthiazol-2-ylthio)-propan-1,3-dicarbonsäure
3-(Benzthiazol-2-ylthio)-3-phenylpropan-1,2-dicarbonsäure
3-(Benzthiazol-2-ylthio)-3-(4-carboxyphenyl)-propan-1,2-dicarbonsäure
3-(Benzthiazol-2-ylthio)-3-(2,4-dicarboxyphenyl)-propan-1,2-dicarbonsäure
3-(Benzthiazol-2-ylthio)-3,3-diphenylpropan-1,2-dicarbonsäure
1-(Benzthiazol-2-ylthio)-butan-1,2-dicarbonsäure
1-(4-Methoxy-6-hydroxybenzthiazol-2-ylthio)-butan-1,2-dicarbonsäure
3-(4,5-Dimethyl-7-propoxybenzthiazol-2-ylthio)-propan-1,2-dicarbonsäure
1-(Benzthiazol-2-ylthio)-2-methylpropan-1,2-dicarbonsäure
2-(Benzthiazol-2-ylthio)-butan-2,3-dicarbonsäure
1-(Benzthiazol-2-ylthio)-butan-2,4-dicarbonsäure
4-(Benzthiazol-2-ylthio)-butan-1,2,3-tricarbonsäure
4-(Benzthiazol-2-ylthio)-butan-1,4-dicarbonsäure
1-(Benzthiazol-2-ylthio)-pentan-1,5-dicarbonsäure
3-(Benzthiazol-2-ylthio)-hexan-1,2-dicarbonsäure
8-(Benzthiazol-2-ylthio)-octan-1,3,5,7-tetracarbonsäure
1-(Benzthiazol-2-ylthio)-cyclohexan-1,2-dicarbonsäure
4-(Benzthiazol-2-ylthio)-cyclohexan-1,2-dicarbonsäure
1-(Benzthiazol-2-ylthio)-propan-1,2,3-tricarbonsäure
1-(Benzthiazol-2-ylthio)-3-chlorpropan-1,2-dicarbonsäure
1-(Benzthiazol-2-ylthio)-3-methoxypropan-1,2-dicarbonsäure
1-(Benzthiazol-2-ylthio)-3-hydroxypropan-1,2-dicarbonsäure
1-(Benzthiazol-2-ylthio)-2-phenylbernsteinsäure
1-(Benzthiazol-2-ylthio)-2-benzylbernsteinsäure
1-(Benzthiazol-2-ylthio)-3-methylbutan-1,3-dicarbonsäure
3-(Benzthiazol-2-ylthio)-hexan-3,4-dicarbonsäure
2,3-Bis-(benzthiazol-2-ylthio)-butan-1,4-dicarbonsäure
Di-Natrium Benzthiazol-2-ylthiosuccinat
Di-Kalium Benzthiazol-2-ylthiosuccinat
Calcium Benzthiazol-2-ylthiosuccinat
Zink Benzthiazol-2-ylthiosuccinat
Cobalt Benzthiazol-2-ylthiosuccinat
Aluminium Benzthiazol-2-ylthiosuccinat
Ammonium Benzthiazol-2-ylthiosuccinat
Bis-methylammonium Benzthiazol-2-ylthiosuccinat
Bis-triethanolammonium Benzthiazol-2-ylthiosuccinat
Bis-octylammonium Benzthiazol-2-ylthiosuccinat
Bis-cyclohexylammonium Benzthiazol-2-ylthiosuccinat

Diethylammonium Benzthiazol-2-ylthio-succinat
Tributylammonium Benzthiazol-2-ylthio-succinat
Di-Natrium 3-(Benzthiazol-2-ylthio)-propan-1,2-dicarboxylat
Di-Kalium 3-(Benzthiazol-2-ylthio)-propan-1,2-dicarboxylat
Calcium 3-(Benzthiazol-2-ylthio)-propan-1,2-dicarboxylat
Zink 3-(Benzthiazol-2-ylthio)-propan-1,2-dicarboxylat
Aluminium 3-(Benzthiazol-2-ylthio)-propan-1,2-dicarboxylat
Ammonium 3-(Benzthiazol-2-ylthio)-propan-1,2-dicarboxylat
Bis-methylammonium 3-(Benzthiazol-2-ylthio)-propan-1,2-dicarboxylat
Bis-(triethanolammonium) 3-(Benzthiazol-2-ylthio)-propan-1,2-dicarboxylat.

Die Wasserlöslichkeit der erfindungsgemäßen Korrosionsinhibitoren b) soll vorzugsweise kleiner als 400 mg/l sein.

Einige der erfindungsgemäß als Korrosionsinhibitor verwendeten Verbindungen der Formel II sind bekannte Verbindungen, andere sind neue Verbindungen. Die Herstellung der Verbindungen kann gemäß einem Verfahren, das Gegenstand einer separaten Patentanmeldung ist, durch Umsetzung einer Verbindung der Formel III

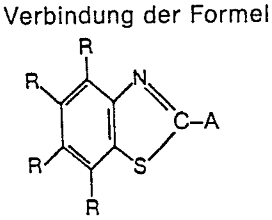 III

worin A eine Abgangsgruppe wie z.B. Cl, Br, I oder p-Tosyloxy ist, mit einer Verbindung der Formel

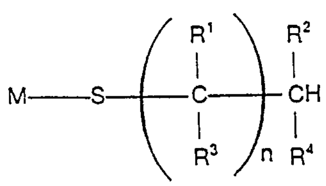

worin M Wasserstoff oder ein Kation, wie z.B. ein Alkalimetall-Erdalkalimetall- oder Ammonium-Kation, ist, geschehen. Alternativ kann eine Verbindung der Formel IV

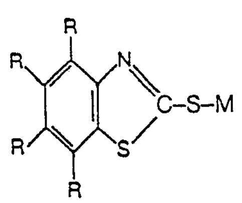 IV

mit einer Verbindung der Formel

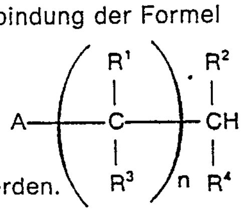

umgesetzt werden.

Verbindungen der Formel II, worin X Schwefel oder NH und $R^4$ Carboxyl ist, können auch durch Umsetzung von IV, worin M Wasserstoff ist und X = S oder NH ist, mit einer $\alpha,\beta$-ungesättigten Säure der Formel

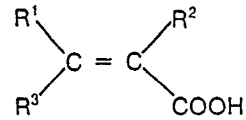

nach einem Verfahren, das Gegenstand einer separaten Patentanmeldung ist, hergestellt werden.

Die Komponente a) kann ein beliebiger Filmbildner sein, wie solche als Bindemittel für Überzugsmittel bekannt sind. Insbesondere kann dies sein ein Epoxidharz, Polyurethanharz, Aminoplastharz, Acrylharz, Polyesterharz, Alkydharz oder ein Gemisch solcher Harze. Weitere Beispiele geeigneter Bindemittel sind Vinylharze wie Polyvinylbutyral, Polyvinylacetat oder Polyvinylchlorid oder deren Copolymere, Phenolharze, chlorierte Kautschuke, Styrol-Butadien-Copolymere, trocknende Öle oder Celluloseester.

Geeignete Epoxidharze sind solche, welche im Durchschnitt mehr als eine Epoxidgruppe pro Molekül besitzen, beispielsweise
Bis-(2,3-epoxycyclohexyl)-ether,
4-Epoxyethyl-cyclohexenoxid oder der
2-Methyl-4,5-epoxycyclohexylmethylester von
2-Methyl-4,5-epoxycyclohexancarbonsäure;
Di- und Polyglycidylester von aliphatischen Polyolen, wie z.B. von 1,4-Butandiol oder Polyalkylenglykolen; Di- oder Polyglycidylether von cycloaliphatischen Polyolen, wie z.B. von 2,2-Bis-(4-hydroxycyclohexyl)-propan; Di- und Polyglycidylether von aromatischen Polyolen, wie z.B. von Resorcin,
Bis-(4-hydroxyphenyl)-methan,
2,2-Bis-(4-hydroxyphenyl)-propan,
2,2-Bis-(4-Hydroxy-3,5-dibromphenyl)-propan,
von 1,1,2,2-Tetrakis-(4-hydroxyphenyl)-ethan
oder von Kondensationsprodukten von Phenolen mit Formaldehyd wie von Phenol- oder Kresol-Novolaken; $\beta$-Methylglycidylether von Polyolen; Glycidylester von mehrbasischen Carbonsäuren, wie z.B. von Phthal-, Terephthal-, Tetrahydrophthal- oder Hexahydrophthalsäure; N-Glycidylderivate von Aminen, Amiden oder Stickstoff-Heterocyclen, wie z.B.
N,N-Diglycidylanilin,
N,N-Diglycidyltoluidin oder
N,N,N',N'-Tetraglycidyl-bis-(4-aminophenyl)-methan,
Triglycidylisocyanurat,
N,N'-Diglycidylethylenharnstoff,
N,N'-Diglycidyl-5,5-dimethylhydantoin;
N,N'-Diglycidyl-5-isopropylhydantoin oder
N,N'-Diglycidyl-5,5-dimethyl-6-isopropyl-5,6-dihydrouracil.

Bevorzugte Epoxidharze sind solche auf Basis von aromatischen Polyolen, insbesondere von Bis-phenolen. Die Epoxidharze werden in Verbindung mit einem Härter verwendet. Dieser kann insbesondere eine Amino- oder Hydroxylverbindung sein oder eine Säure oder ein Säureanhydrid oder eine Lewis-Säure. Beispiele hierfür sind Polyamine, Polyaminoamide, Polysulfidpolymere, Polyphenole, Borfluorid und dessen Komplexe, Polycarbonsäuren, 1,2-Dicarbonsäureanhydride oder Pyromellithsäure-dianhydrid.

Das Überzugsmittel kann außer den Komponenten a) und b) noch weitere Komponenten enthalten wie z.B. Pigmente, Farbstoffe, Füllstoffe und sonstige Additive wie sie für Überzugsmittel üblich sind. Die Pigmente können organische, anorganische oder metallische Pigmente sein wie z.B. Titandioxid, Eisenoxid, Aluminiumbronze, Phthalocyaninblau etc. Es können auch Korrosionsschutz-Pigmente mitverwendet werden wie z.B. phosphathaltige oder borathaltige Pigmente, Metall- und Metalloxid-Pigmente (siehe Farbe und Lack 88 (1982), 183) oder die in der EP-A-54 267 beschriebenen Pigmente. Als Füllstoffe können beispielsweise Talkum, Kreide, Tonerde, Baryt, Glimmer oder Kieselerde mitverwendet werden. Weitere Additive sind z.B. Verlaufshilfsmittel, Dispergiermittel, Thixotropiemittel, Haftverbesserer, Antioxidantien, Lichtschutzmittel oder Härtungskatalysatoren.

Von besonderer Bedeutung ist der Zusatz basischer Füllstoffe oder Pigmente. Diese bewirken in bestimmten Bindemittelsystemen wie z.B. in Acryl- und Alkydharzen einen synergistischen Effekt auf die Korrosionsinhibierung. Beispiele für solche basische Füllstoffe oder Pigmente sind Calcium- oder Magnesiumcarbonat, Zinkoxid, Zinkcarbonat, Zinkphosphat, Magnesiumoxid, Aluminiumoxid, Aluminiumphosphat oder Gemische davon. Beispiele für Pigmente sind z.B. solche auf Basis von Aminoanthrachinon.

Die erfindungsgemäßen Korrosionsinhibitoren können auch zuerst auf solche basische Füllstoffe oder Pigmente aufgebracht werden, beispielsweise durch Chemisorption aus wäßriger Lösung, und die so erhaltenen Zubereitungen dem Überzugsmittel zugesetzt werden.

In einer weiteren bevorzugten Ausführungsform der Erfindung werden die Korrosionsinhibitoren zusammen mit basischen Ionenaustauschern verwendet oder man behandelt einen solchen Ionenaustauscher zuerst mit einer Lösung des Inhibitors und setzt diese Zubereitung dem Überzugsmittel zu. Beispiele für basische Ionenaustauscher sind alle typischen Anionenaustauscher, wie sie z.B. unter den Namen Dowex® 1 oder 11 oder Amberlite® IRA im Handel sind.

Schließlich kann der Korrosionsinhibitor auch auf einem neutralen Trägerstoff aufgebracht werden. Als Trägerstoffe eignen sich insbesondere pulverförmige Füllstoffe oder Pigmente. Diese Technik ist in der DE-OS3 122 907 näher beschrieben.

Das Überzugsmittel kann außer der Komponente b) noch einen anderen organischen, metallorganischen oder anorganischen Korrosionsinhibitor enthalten wie z.B. Salze der Nitroisophthalsäure, Tannin, Phosphorester, technische Amine, substituierte Benztriazole oder substituierte Phenole, wie sie z.B. in der DE-OS 3 146 265 beschrieben sind.

Die erfindungsgemäßen Überzugsmittel werden vorzugsweise als Grundierung (Primer) auf metallischen Substraten, insbesondere auf Eisen, Stahl, Kupfer und Aluminium verwendet. Sie können dabei als sogenannte Konversions-Anstriche fungieren, indem an der Grenzfläche von Metall und Überzug chemische Reaktionen stattfinden. Der Auftrag der Überzüge kann nach den üblichen Methoden erfolgen wie Spritzen, Streichen, Aufrollen, Tauchen oder durch Elektroabscheidung, insbesondere kathodische Abscheidung. Je nachdem, ob der Filmbildner ein physikalisch trocknendes oder ein hitze- oder strahlenhärtbares Harz ist, erfolgt die Aushärtung der Überzüge bei Raumtemperatur, durch Einbrennen oder durch Bestrahlung.

Die Korrosionsinhibitoren können dem Überzugsmittel während dessen Herstellung zugesetzt werden, z.B. während der Pigmentverteilung durch Mahlen oder man löst die Inhibitoren in einem Lösungsmittel vor und rührt die Lösung in das Überzugsmittel ein. Man verwendet den Inhibitor in einer Menge von 0,1–20 Gew.-%, vorzugsweise 0,5–5 Gew.-%, bezogen auf den Feststoffgehalt des Überzugsmittels.

Die folgenden Beispiele beschreiben die erfindungsgemäßen Überzugsmittel und ihre Anwendung näher.

Beispiel 1

Ein Primer aus einem aromatischen Epoxidharz, rotem Eisenoxid, Talkum und einem Polyaminoamid-Härter, enthaltend den in der Tabelle 1 angegebenen Korrosionsinhibitor, wird auf sandgestrahlte Stahlbleche aufgetragen und 1 Woche bei Raumtemperatur gehärtet. Darauf wird ein weißer Decklack aus einem Zweikomponenten-Polyurethan aufgetragen und ebenfalls eine Woche härten gelassen. In die lackierte Probe wird mit einem Sikkens-Messer Typ 463 ein X-förmiger Schnitt, der bis in das Metall reicht, eingeritzt. Dann werden die Bleche einem Salzsprühtest nach ASTM B 117 mit einer Dauer von 1000 Stunden unterworfen. Die Ergebnisse sind in Tabelle 1 aufgeführt.

Tabelle 1

| Korrosions-inhibitor | Blasenbildung | Unter-rostung |
|---|---|---|
| keiner | stark | stark |
| 3% Verbindung 1 | wenige Blasen | gering |
| 6% Verbindung 1 | keine Blasen | keine |

Verbindung 1 = Benzthiazol-2-ylthiobernsteinsäure

Beispiel 2

Ein Alkydharz-Lack wird nach folgender Rezeptur bereitet

40 Teile Alphthalat® AM 380 (60%ige Xylol-Lösung)
Alkydharz der Fa. Reichhold Albert Chemie AG

4 Teile Eisenoxidrot 225 der Fa. Bayer AG
17,4 Teile Talkum (mikronisiert)
13 Teile Mikronisiertes Calciumcarbonat (Millicarb®, Plüss-Staufer AG)
0,3 Teile Hautverhütungsmittel Luaktin® (BASF)
0,6 Teile 8%ige Cobaltnaphthenat-Lösung
24,7 Teile Xylol/Ethylglykol-Gemisch 6:40.

Die in den folgenden Tabellen angegebenen Korrosionsinhibitoren werden in einem Teil des Lösungsmittels vorgelöst und dem Lack zugegeben. Der Lack wird 7 Tage mit Glasperlen gemahlen bis zu einer Pigment- und Füllstoffkorngröße von 15 µm.

Der Lack wird auf sandgestrahlte Stahlbleche von 7 × 13 cm aufgespritzt in einer Schichtdicke, die nach dem Trocknen ca. 50 µm beträgt. Nach 7 Tagen Trocknung bei Raumtemperatur werden die Proben 60 Minuten bei 60 °C ausgehärtet.

In die gehärtete Lackoberfläche werden zwei kreuzförmige Schnitte von 4 cm Länge bis zum Metall eingeschnitten mit Hilfe eines Bonder-Kreuzschnittgerätes. Zum Schutze der Kanten wird auf diese ein Kantenschutzmittel (Icosit® 255) aufgebracht.

Die Proben werden nunmehr einem Salzsprühtest ASTM B 117 mit einer Dauer von 600 Stunden unterworfen. Nach jeweils 200 Stunden Bewitterung wird der Zustand des Anstriches beurteilt, und zwar der Blasengrad (gemäß DIN 53 209) am Kreuzschnitt und auf der lackierten Fläche sowie der Rostgrad (gemäß DIN 53 210) auf der ganzen Fläche.

Nach Ende des Tests wird der Anstrich durch Behandlung mit konzentrierter Natronlauge entfernt und die Korrosion des Metalls am Kreuzschnitt (gemäß DIN 53 167) sowie über die restliche Fläche beurteilt. Die Beurteilung erfolgt jeweils in einer 6-Stufen-Skala. Die Summe der Bewertung des Anstriches und der Bewertung der Metalloberfläche ergibt den Korrosionsschutzwert KS. Je höher dieser ist, desto wirkungsvoller ist der getestete Inhibitor.

Tabelle 2

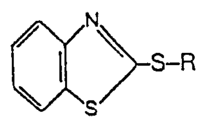

| R | Zusatzmenge | Beurteilung Anstrich | Beurteilung Metall | KS |
|---|---|---|---|---|
| $-CH_2-COOH$ | 1 % | 4,6 | 2,7 | 7,3 |
| | 3 % | 2,0 | 0,6 | 2,6 |
| $-CH_2-CH_2-COOH$ | 1 % | 4,6 | 4,5 | 9,1 |
| | 3% | 3,0 | 2,7 | 5,7 |
| $-(CH_2)_5-COOH$ | 1 % | 4,4 | 2,7 | 7,1 |
| | 3% | 4,4 | 2,7 | 7,1 |
| $-(CH_2)_{10}-COOH$ | 1 % | 4,4 | 2,0 | 6,4 |
| | 3% | 4,3 | 1,7 | 6,0 |
| $CH_3$<br>$-CH-CH_2COOH$ | 1 % | 3,2 | 1,5 | 4,7 |
| | 3 % | 3,2 | 1,5 | 4,7 |
| $CH_3$<br>$-CH_2-CH-COOH$ | 1 % | 2,9 | 1,3 | 4,2 |
| | 3 % | 2,3 | 1,2 | 3,5 |
| COOH<br>$-CH-CH_2-COOH$ | 0,5% | 5,4 | 2,8 | 8,2 |
| | 1 % | 4,4 | 0,6 | 5,0 |
| | 2 % | 2,8 | 1,0 | 3,8 |
| | 3 % | | | 4 |
| Zn-Salz davon | 1 % | 5,7 | 0,6 | 6,3 |
| | 3 % | 5,1 | 0,6 | 5,7 |
| COOH<br>$-CH_2-CH-CH_2-COOH$ | 1 % | 5,5 | 5,5 | 11 |
| | 3 % | 4,5 | 3,5 | 8 |

Tabelle 2 (Fortsetzung)

| R | Zusatzmenge | Beurteilung Anstrich | Beurteilung Metall | KS |
|---|---|---|---|---|
| COOH<br>$-CH_2-CH-CH_2-CH_2-COOH$ | 1 % | 3,2 | 0,6 | 3,8 |
| | 3 % | 2,8 | 0,6 | 3,4 |
| COOH<br>$-C=CH-COOH$ | 1 % | 3,6 | 0,6 | 4,2 |
| | 3 % | 4,0 | 0,6 | 4,6 |
| ohne Inhibitor | | 1,9 | 0,6 | 2,5 |

Beispiel 3

Es wird wie in Beispiel 2 gearbeitet. Zur Grundrezeptur kommen die in der folgenden Tabelle angegebenen Inhibitoren und basischen Zusätze vor. Die Beurteilung der Wirkung geschieht wie in Beispiel 2 durch Angabe des Korrosionsschutzwertes KS.

Tabelle 3

| Korrosionsinhibitor | KS |
|---|---|
| 2% Verbindung 2 | 7,3 |
| 10% Zinkoxid | 7,0 |
| 2% Verbindung 2 + 10% ZnO | 10,1 |
| 2% Verbindung 2 | 7,3 |
| 10% Zinkcarbonat | 3,4 |
| 2% Verbindung 2 + 10% $ZnCO_3$ | 10,1 |
| 2% Verbindung 2 | 7,3 |
| 10% Zinkphosphat | 7,7 |
| 2% Verbindung 2 + 10% Zn-phosphat | 9,9 |
| 2% Verbindung 2 | 7,3 |
| 10% basisches Pigment A | 4,1 |
| 2% Verbindung 2 + 10% Pigment A | 11,3 |

Verbindung 2 = 3-(Benzthiazol-2-ylthio)-propan-1,2-dicarbonsäure
Pigment A = Chromophthalrot® $A_2B$ (Ciba-Geigy AG)

Beispiel 4

Ein Primer aus einem grauen Acrylharzlack wird auf phosphatisierte Eisenbleche aufgetragen und 60 Minuten bei Raumtemperatur trocknen gelassen. In die lackierte Fläche wird ein X-förmiger Schnitt eingeritzt. Die Proben werden einem Salzsprühtest über 500 Stunden unterworfen und anschließend visuell beurteilt.

| Inhibitor | Beurteilung |
|---|---|
| keiner | starke Korrosion |
| 2% Verbindung 1 | keine Korrosion |
| 2% Ca-Salz davon | keine Korrosion |
| 2% Zn-Salz davon | geringe Korrosion am Schnitt |

**Patentansprüche**

1. Antikorrosives Überzugsmittel enthaltend
a) einen Filmbildner und
b) als Korrosionsinhibitor eine wirksame Menge einer aliphatischen oder cycloaliphatischen Mono-, Di-, Tri- oder Tetracarbonsäure, die in ihrem aliphatischen bzw. cycloaliphatischen Rest durch mindestens eine Gruppe der Formel I substituiert ist,

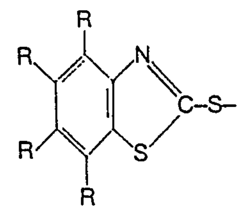 I

worin jedes R unabhängig voneinander Wasserstoff, Alkyl, Halogenalkyl, Alkoxy, Alkylthio, Alkylsulfonyl, Cycloalkyl, Phenyl, Alkylphenyl, Phenylalkyl, Halogen, $-CN$, $-NO_2$, $-COOH$, $-COOAlkyl$, $-OH$ oder eine sekundäre oder tertiäre Amino- oder Carbamoylgruppe bedeutet, sowie Basen-Additionssalze dieser Verbindungen.

2. Überzugsmittel gemäß Anspruch 1, enthaltend einen Korrosionsinhibitor mit einer Gruppe der Formel I, worin einer der Substituenten R Wasserstoff, $C_1$–$C_4$-Alkyl, $C_1$–$C_4$-Alkoxy oder eine Aminogruppe ist und die drei anderen R Wasserstoff sind.

3. Überzugsmittel gemäß Anspruch 1, enthaltend einen Korrosionsinhibitor mit einer Gruppe der Formel I, worin jedes R Wasserstoff bedeutet.

4. Überzugsmittel gemäß Anspruch 1, worin die Komponente b) eine Mono- oder Dicarbonsäure oder deren Salz ist.

5. Überzugsmittel gemäß Anspruch 1, worin die Komponente b) eine Gruppe der Formel I enthält, die in Beta-Stellung zu einer Carboxylgruppe steht.

6. Überzugsmittel gemäß Anspruch 1, enthaltend als Komponente b) eine Verbindung der Formel II,

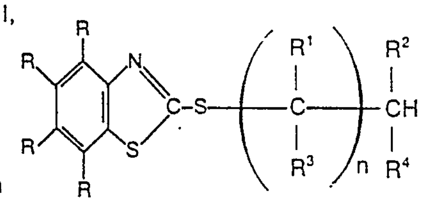 II

worin

R die in Anspruch 1 gegebene Bedeutung hat, n null oder 1 ist und $R^1$, $R^2$, $R^3$, $R^4$ unabhängig voneinander Wasserstoff, Alkyl, Hydroxyalkyl, Halogenalkyl, Alkoxyalkyl, Carboxyalkyl, Carboxyl oder unsubstituiertes oder mono- oder disubstituiertes Phenyl oder Phenylalkyl bedeuten, oder $R^1$ und $R^2$ oder $R^1$ und $R^3$ zusammen unverzweigtes Alkylen bedeuten, das durch 1 oder 2 –COOH substituiert sein kann oder $R^1$ und $R^2$ zusammen eine direkte Bindung bedeuten, wobei mindestens einer der Substituenten $R^1$, $R^2$, $R^3$, $R^4$ eine Carboxy- oder Carboxylalkylgruppe ist,
sowie Basen-Additionssalze dieser Verbindungen.

7. Überzugsmittel gemäß Anspruch 6, dadurch gekennzeichnet, daß $R^1$, $R^2$, $R^3$ und $R^4$ Wasserstoff, $C_1$–$C_{18}$-Alkyl, $C_2$–$C_{12}$-Carboxyalkyl, Carboxyl, Phenyl oder Benzyl sind, oder $R^1$ und $R^2$ zusammen Tri- oder Tetramethylen sind, welches durch $C_1$–$C_4$-Alkyl oder 1 oder 2 Carboxylgruppen substituiert sein können.

8. Überzugsmittel gemäß Anspruch 6, dadurch gekennzeichnet, daß in Formel II $R^1$, $R^2$, $R^3$ und $R^4$ unabhängig voneinander Wasserstoff, $C_1$–$C_4$-Alkyl, Carboxyl oder $C_2$–$C_6$-Carboxyalkyl sind.

9. Überzugsmittel gemäß Anspruch 6, dadurch gekennzeichnet, daß in Formel II mindestens zwei der Substituenten $R^1$, $R^2$, $R^3$, $R^4$ eine Carboxyl- oder Carboxyalkylgruppe sind.

10. Überzugsmittel gemäß Anspruch 1, worin die Komponente b) eine Verbindung der Formel

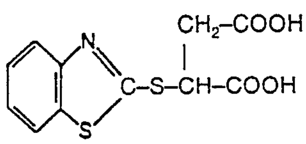

oder

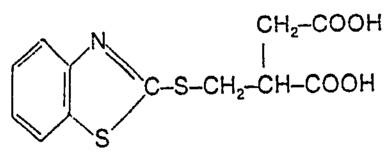

ist.

11. Überzugsmittel gemäß Anspruch 1, worin die Komponente b) eine Verbindung der Formel

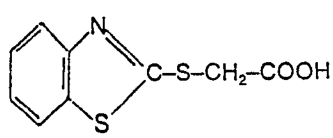

oder

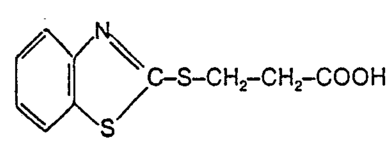

ist.

12. Überzugsmittel gemäß Anspruch 1, worin die Komponente b) als Salz eines Alkali- oder Erdalkalimetalls, eines Metalls der Gruppe IIB, IIIA oder VIII des periodischen Systems der Elemente, als Ammoniumsalz oder als Salz eines organischen Amins vorliegt.

13. Überzugsmittel gemäß Anspruch 12, worin die Komponente b) als Natrium-, Kalium-, Ammonium-, Calcium-, Magnesium-, Zink- oder Aluminiumsalz oder als Salz eines primären, sekundären oder tertiären Amins vorliegt.

14. Überzugsmittel gemäß Anspruch 1, enthaltend als Filmbildner a) ein Epoxidharz, Polyurethanharz, Aminoplastharz, Acrylharz, Polyesterharz, Alkydharz oder ein Gemisch solcher Harze.

15. Überzugsmittel gemäß Anspruch 1, enthaltend als Filmbildner a) Polyvinylbutyral, Polyvinylacetat, Polyvinylchlorid oder deren Copolymere, ein Phenolharz, einen chlorierten Kautschuk, ein Styrol-Butadien-Copolymer, ein trocknendes Öl oder einen Celluloseester.

16. Überzugsmittel gemäß Anspruch 14, worin der Filmbildner ein Epoxidharz auf Basis eines aromatischen Polyols ist.

17. Überzugsmittel gemäß Anspruch 1, enthaltend außer den Komponenten a) und b) ein Pigment, einen Farbstoff, einen Füllstoff oder sonstige für Überzugsmittel übliche Additive.

18. Überzugsmittel gemäß Anspruch 17, enthaltend einen basischen Füllstoff oder ein basisches Pigment.

19. Überzugsmittel gemäß Anspruch 17, enthaltend einen basischen Ionenaustauscher.

20. Überzugsmittel gemäß Anspruch 1, enthaltend außer dem Korrosionsinhibitor b) einen oder mehrere weitere Korrosionsinhibitoren, die organische, metallorganische oder anorganische Verbindungen sein können.

21. Überzugsmittel gemäß Anspruch 1, enthaltend 0,1 bis 20 Gew.-% der Komponente b), bezogen auf den Feststoffgehalt des Überzugsmittels.

22. Überzugsmittel gemäß Anspruch 1, enthaltend 0,5 bis 5 Gew.-% der Komponente b).

23. Verwendung eines Überzugsmittels des Anspruchs 1 als Primer auf metallischen Substraten.

24. Verwendung gemäß Anspruch 23 als Primer auf Substraten aus Eisen, Stahl, Kupfer oder Aluminium.

25. Verwendung gemäß Anspruch 23 als Elektrotauchlack für die kathodische Elektroabscheidung.

## Claims

1. A corrosion-inhibiting coating composition containing

a) a film-former and

b) as the corrosion inhibitor, an effective amount of an aliphatic or cycloaliphatic mono-, di-, tri- or tetracarboxylic acid which is substituted in its aliphatic or cycloaliphatic radical by at least one group of the formula I

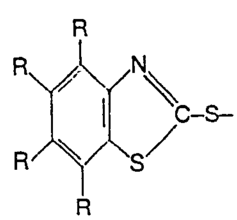

I

in which each R independently of the others is hydrogen, alkyl, halogenoalkyl, alkoxy, alkylthio,

alkylsulfonyl, cycloalkyl, phenyl, alkylphenyl, phenylalkyl, halogen, –CN, $-NO_2$, –COOH, –COOalkyl, –OH or a secondary or tertiary amino or carbamoyl group, and also base addition salts of these compounds.

2. A coating composition according to claim 1, containing a corrosion inhibitor containing a group of the formula I in which one of the substituents R is hydrogen, $C_1$–$C_4$alkyl, $C_1$–$C_4$alkoxy or an amino group and the other three Rs are hydrogen.

3. A coating composition according to claim 1, containing a corrosion inhibitor containing a group of the formula I in which each R is hydrogen.

4. A coating composition according to claim 1, in which the component b) is a monocarboxylic or dicarboxylic acid or a salt thereof.

5. A coating composition according to claim 1, in which the component b) contains a group of the formula I which is in the beta-position relative to a carboxyl group.

6. A coating composition according to claim 1, containing, as the component b), a compound of the formula II

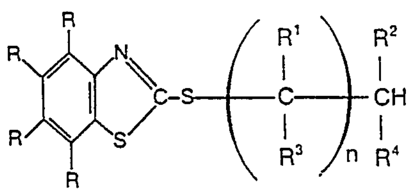 II

in which R is as defined in claim 1, n is zero or 1 and $R^1$, $R^2$, $R^3$ and $R^4$ independently of one another are hydrogen, alkyl, hydroxyalkyl, halogenoalkyl, alkoxyalkyl, carboxyalkyl, carboxyl or phenyl or phenylalkyl which is unsubstituted or monosubstituted or disubstituted, or $R^1$ and $R^2$ or $R^1$ and $R^3$ together are linear alkylene which can be substituted by 1 or 2 –COOH groups, or $R^1$ and $R^2$ together are a direct bond, at least one of the substituents $R^1$, $R^2$, $R^3$ and $R^4$ being a carboxyl or carboxyalkyl group, and also base addition salts of these compounds.

7. A coating composition according to claim 6, wherein $R^1$, $R^2$, $R^3$ and $R^4$ are hydrogen, $C_1$–$C_{18}$alkyl, $C_2$–$C_{12}$carboxyalkyl, carboxyl, phenyl or benzyl, or $R^1$ and $R^2$ together are trimethylene or tetramethylene which can be substituted by $C_1$–$C_4$alkyl or by 1 or 2 carboxyl groups.

8. A coating composition according to claim 6, wherein $R^1$, $R^2$, $R^3$ and $R^4$ in formula II independently of one another are hydrogen, $C_1$–$C_4$alkyl, carboxyl or $C_2$–$C_6$carboxyalkyl.

9. A coating composition according to claim 6, wherein at least two of the substituents $R^1$, $R^2$, $R^3$ and $R^4$ in formula II are a carboxyl or carboxyalkyl group.

10. A coating composition according to claim 1, in which the component b) is a compound of the formula

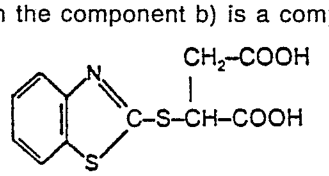 or

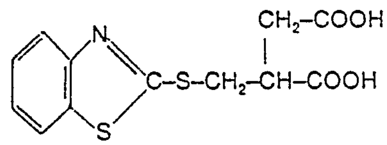

11. A coating composition according to claim 1, in which the component b) is a compound of the formula

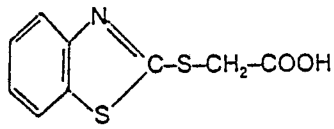 or

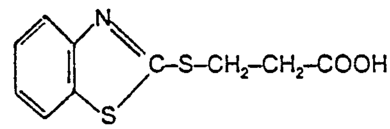

12. A coating composition according to claim 1, in which the component b) is present as the salt of an alkali metal or alkaline earth metal or a metal of group IIB, IIIA or VIII of the periodic system of the elements, as an ammonium salt or as the salt of an organic amine.

13. A coating composition according to claim 12, in which the component b) is present as a sodium, potassium, ammonium, calcium, magnesium, zinc or aluminium salt or as the salt of a primary. secondary or tertiary amine.

14. A coating composition according to claim 1, containing, as the film-former a), an epoxide resin, polyurethane resin, aminoplast resin, acrylic resin, polyester resin or alkyd resin or a mixture of such resins.

15. A coating composition according to claim 1, containing, as the film-former a), polyvinyl butyral, polyvinyl acetate, polyvinyl chloride or copolymers thereof, a phenolic resin, a chlorinated rubber, a styrene/butadiene copolymer, a drying oil or a cellulose ester.

16. A coating composition according to claim 14, in which the film-former is an epoxide resin based on an aromatic polyol.

17. A coating composition according to claim 1, containing, besides the components a) and b), a pigment, a dye, an extender or other additives customary for coating compositions.

18. A coating composition according to claim 17, containing a basic extender or a basic pigment.

19. A coating composition according to claim 17, containing a basic ion exchanger.

20. A coating composition according to claim 1, containing, besides the corrosion inhibitor b), one or more further corrosion inhibitors which can be organic, metal-organic or inorganic compounds.

21. A coating composition according to claim 1, containing 0.1 to 20% by weight of the component b), based on the solids content of the coating composition.

22. A coating composition according to claim 1, containing 0.5 to 5% by weight of the component b).

23. Use of a coating composition of claim 1 as a primer on metallic substrates.

24. Use according to claim 23 as a primer on substrates composed of iron, steel, copper or aluminium.

25. Use according to claim 23 as an electrocoating paint for cathodic electrodeposition.

**Revendications**

1. Produit de revêtement anti-corrosion qui contient:

a) un feuillogène et

b) comme inhibiteur de corrosion, une quantité efficace d'un acide mono-, di-, tri- ou tétra-carboxylique aliphatique ou cycloaliphatique dont le radical aliphatique ou cycloaliphatique porte au moins un radical répondant à la formule I:

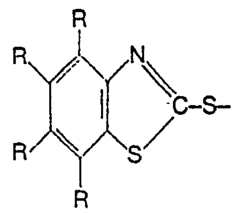

I

dans laquelle les R représentent chacun, indépendamment les uns des autres, l'hydrogène, un alkyle, un halogénoalkyle, un alcoxy, un alkylthio, un alkylsulfonyle, un cycloalkyle, un phényle, un alkylphényle, un phénylalkyle, un halogène, $-CN$, $-NO_2$, $-COOH$, $-COO$alkyl, $-OH$, un radical amino secondaire ou tertiaire ou un radical carbamoyle, ou d'un sel formé par addition d'un tel composé avec une base.

2. Produit de revêtement selon la revendication 1 qui contient un inhibiteur de corrosion portant un radical de formule I dans lequel l'un des symboles R représente l'hydrogène, un alkyle en $C_1$–$C_4$, un alcoxy en $C_1$–$C_4$ ou un radical amino et les trois autres symboles R représentent chacun l'hydrogène.

3. Produit de revêtement selon la revendication 1 qui contient un inhibiteur de corrosion porteur d'un radical de formule I dans lequel chacun des symboles R représente l'hydrogène.

4. Produit de revêtement selon la revendication 1 dans lequel la composante b) est un acide monocarboxylique ou dicarboxylique ou un sel d'un tel acide.

5. Produit de revêtement selon la revendication 1 dans lequel la composante b) contient un radical de formule I qui se trouve à la position β par rapport à un radical carboxy.

6. Produit de revêtement selon la revendication 1 qui contient, comme composante b), un composé répondant à la formule II:

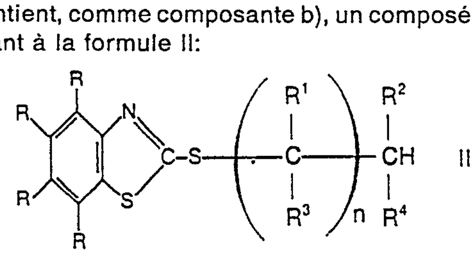

II

dans laquelle:

les R ont les significations qui leur ont été données à la revendication 1,

n désigne un nombre égal à 0 ou à 1 et

$R^1$, $R^2$, $R^3$ et $R^4$ représentent chacun, indépendamment les uns des autres, l'hydrogène, un alkyle, un hydroxyalkyle, un halogéno-alkyle, un alcoxyalkyle, un carboxyalkyle, un carboxy ou un radical phényle ou phénylalkyle non substitué ou porteur d'un ou de deux substituants, ou

$R^1$ et $R^2$, ou $R^1$ et $R^3$, représentent ensemble un alkylène non ramifié qui peut porter un ou deux radicaux $-COOH$, ou

$R^1$ et $R^2$ forment ensemble une liaison directe, et au moins un des symboles $R^1$, $R^2$, $R^3$ et $R^4$ représente un radical carboxy ou carboxy-alkyle,

ou un sel d'addition formé par un tel composé avec une base.

7. Produit de revêtement selon la revendication 6, caractérisé en ce que $R^1$, $R^2$, $R^3$ et $R^4$ représentent chacun l'hydrogène, un alkyle en $C_1$–$C_{18}$, un carboxy-alkyle en $C_2$–$C_{12}$, un carboxy, un phényle ou un benzyle, ou $R^1$ et $R^2$ forment ensemble un radical triméthylène ou tétraméthylène qui peut porter un alkyle en $C_1$–$C_4$ ou un ou deux radicaux carboxy.

8. Produit de revêtement selon la revendication 6, caractérisé en ce que, dans la formule II, $R^1$, $R^2$, $R^3$ et $R^4$ représentent chacun, indépendamment les uns des autres, l'hydrogène, un alkyle en $C_1$–$C_4$, un carboxy ou un carboxy-alkyle en $C_2$–$C_6$.

9. Produit de revêtement selon la revendication 6, caractérisé en ce que, dans la formule II, au moins deux des symboles $R^1$, $R^2$, $R^3$ et $R^4$ représentent un radical carboxy ou carboxy-alkyle.

10. Produit de revêtement selon la revendication 1 dans lequel la composante b) est un composé répondant à l'une ou à l'autre des formules suivantes:

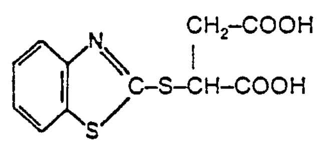

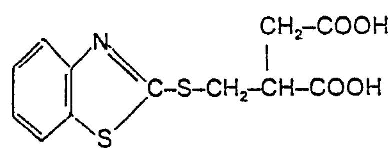

11. Produit de revêtement selon la revendication 1 dans lequel la composante b) est un composé répondant à l'une ou à l'autre des formules suivantes:

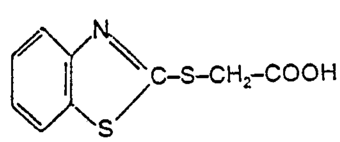

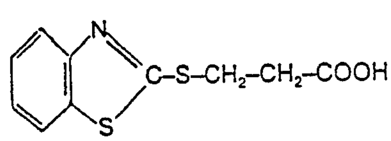

12. Produit de revêtement selon la revendication 1 dans lequel la composante b) se trouve sous la forme d'un sel d'un métal alcalin, d'un métal alcalino-terreux d'un métal d'un des groupes IIB, IIIA et VIII de la classification périodique des éléments, d'un sel d'ammonium ou d'un sel dérivant d'une amine organique.

13. Produit de revêtement selon la revendication 12 dans lequel la composante b) se trouve sous la forme d'un sel de sodium, de potassium, d'ammonium, de calcium, de magnésium, de zinc ou d'aluminium ou d'un sel d'une amine primaire, secondaire ou tertiaire.

14. Produit de revêtement selon la revendication 1 qui contient, comme feuillogène a), une résine époxydique, une résine de polyuréthanne, une résine d'aminoplaste, une résine acrylique, une résine de polyester, une résine alkyde ou un mélange de résines de ce genre.

15. Produit de revêtement selon la revendication 1 qui contient, comme feuillogène a), du poly-(vinyl-butyral), du poly-(acétate de vinyle), du poly-(chlorure de vinyle) ou leurs copolymères, une résine phénolique, un caoutchouc chloré, un copolymère styrène/butadiène, une huile siccative ou un ester de la cellulose.

16. Produit de revêtement selon la revendication 14 dans lequel le feuillogène est une résine époxydique à base d'un polyol aromatique.

17. Produit de revêtement selon la revendication 1 qui, en plus des composantes a) et b), contient un pigment, un colorant, une charge ou d'autres additifs usuels pour produits de revêtement.

18. Produit de revêtement selon la revendication 17 qui contient une charge basique ou un pigment basique.

19. Produit de revêtement selon la revendication 17 qui contient un échangeur d'ions basique.

20. Produit de revêtement selon la revendication 1 qui, en plus de l'inhibiteur de corrosion b), contient un ou plusieurs autres inhibiteurs de corrosion, qui peuvent être des composés organiques, organométalliques ou minéraux.

21. Produit de revêtement selon la revendication 1 qui contient de 0,1 à 20% en poids de la composante b) par rapport à la matière solide contenue dans le produit de revêtement.

22. Produit de revêtement selon la revendication 1 qui contient de 0,5 à 5% en poids de la composante b).

23. Application d'un produit de revêtement selon la revendication 1 comme produit de revêtement de fond pour substrats métalliques.

24. Application selon la revendication 23 comme produit de revêtement de fond sur des substrats en fer, en acier, en cuivre ou en aluminium.

25. Application selon la revendication 23 comme peinture électrophorétique pour l'électrodéposition cathodique.